# EUROPEAN PATENT APPLICATION

(11) **EP 1 146 625 A2**
(43) Date of publication of application: **17.10.2001**
(21) Application number: 01108850.7
(22) Date of filing: 09.04.2001
(51) Int. Cl.: H02K 7/14, H02K 7/08, H02K 7/00, H02K 5/04

(54) **Rotating electrical machine**

(30) Priority: 10.04.2000 JP 2000108258; 03.04.2001 US 681430
(71) Applicant: Kabushiki Kaisha MORIC, Shizuoka-ken (JP)
(72) Inventor: Takano, Tadashi c/o MORIYAMA KOGYO K.K., Shuuchi-gun, Shizuoka-ken (JP)
(74) Representative: Leson, Thomas Johannes Alois, Dipl.-Ing.

(57) **Abstract**

A number of embodiments of rotating electrical machines such as a DC brushless motor that are mounted in a housing arrangement that provides not only a bearing for the rotor but also a cavity in which a major portion of an associated machine having a rotating shaft associated with the DC machine is positioned. Thus, a more universal type of construction is possible that permits greater latitude in the associated equipment. Various arrangements for bearing support of the rotor and housing constructions are disclosed.

## Description

### Background of Invention

This invention relates to a rotating electrical machine and more particularly to an improved housing construction and bearing arrangement for the rotor of such machines.

Rotating electrical machines can take many types and generally consist of either electrical motors or electrical generators. Regardless of the type, however, it is quite common for the rotating electrical machine to be associated with the rotating shaft of another machine. For example, if the machine consists an electrical motor, than the motor normally drives a load.

As an example, it is has been proposed to provide vehicles with electrically driven hydraulic power steering systems. By utilizing such electrical propulsion force, it is not necessary for the vehicle engine power to be continuously consumed in driving a hydraulic pump. Thus, the electrical motor can be switched on or off to drive the power steering pump when conditions arise without excess load on the powering internal combustion engine.

When this is done, however, the rotor of the electrical motor is supported at opposite ends of its housing on bearings generally held in the end caps of the housing. Then, the motor is coupled to a hydraulic pump which itself has its own bearings. The external coupling causes an increase in the overall length and the added bearings can add significantly to the cost and size of the resulting mechanism.

Similar problems arise when the electrical machine comprises a generator and it is driven by another rotating machine such an internal combustion engine. In either instance, there is some desire if not significant advantage in having the construction such that it can be made more compact and the number of bearings and accordingly costs can be reduced significantly.

It is, therefore, a principal object to this invention to provide an improved housing construction for a rotating electrical machine and which housing assembly also accommodates an associated other machine that is driving relationship with the rotor of the rotating electrical machine.

As noted, the bearing arrangement for a rotating electrical machine generally includes a pair of spaced apart bearings that are mounted in the end caps of the housing and which cooperate with ends of the rotor shaft for its journaling. One problem with this construction is that when the mechanism is coupled to another rotating machine, there is some problem in shaft alignment. Also if the end housing is removed from the rotating electrical machine, the remaining end bearing may not be of such a nature so as to hold the rotor shaft in a fixed position.

It is, therefore, a still further object to this invention to provide an improved construction for journaling the rotor and a rotating electrical machine wherein at least one of the rotor bearings has sufficient lengths so as to stabilize the rotor even when the remaining bearing, which may be utilized, is not in place.

### Summary of Invention

A first feature of this invention is adapted to be embodied in a DC rotating electrical machine that is comprised of an outer housing forming a stator of the DC rotating electrical machine. The outer housing is comprised of a generally cylindrical center section closed at opposite ends by first and second end closures. A rotor is journalled within the outer housing and extends through the first end closure for driving connection to a related rotating shaft of another machine. The first end closure forms a cavity in which a substantial portion of the related machine is contained.

Another feature of the invention is also adapted to be embodied in a DC rotating electrical machine. In connection with this feature, an outer housing forms a stator of the machine and is comprised of a generally cylindrical center section closed at opposites ends by first and second end closures. A rotor is positioned within the outer housing and extends through the first end closure for driving connection to a related rotating shaft of another machine. The second end closure carries a cylindrical post that extends into a cylindrical opening in the rotor for journaling the rotor within the outer housing.

### Brief Description of Drawings

FIG. 1 is a schematic view showing an automotive power steering system utilizing a rotating electrical machine embodying the invention.

FIG.2 is an enlarged side elevational view of the rotating electrical machine.

FIG.3 is a cross sectional view taken along the axis of the rotating electrical machine and showing the associated hydraulic pump driven thereby.

FIG. 4 is a cross sectional view, in part similar to FIG. 3 and shows another embodiment of the invention.

FIG. 5 is a cross sectional view, in part similar to FIGS. 3 and 4, and shows a third embodiment of the invention.

FIG. 6 is a partial cross sectional view, in part similar to FIGS. 3, 4 and 5, and shows a fourth embodiment of the invention.

FIG.7 is a partial cross sectional view, in part similar to FIGS. 3-6, and shows a fifth embodiment of the invention.

FIG. 8. is a partial cross sectional view, in part similar to FIGS. 3-7, and shows a sixth embodiment of the invention.

FIG. 9 is a cross sectional view, in part similar to FIGS. 3-8, and shows a seventh embodiment of the invention.

FIG. 10 is an end elevational view of the rotor shaft in this embodiment.

FIG.11 is a cross sectional view, in part similar to FIGS. 3-8, and shows an eighth embodiment of the invention.

FIG. 12 is a cross sectional view, in part similar to FIGS. 3-8 and 11, and shows a ninth embodiment of the invention.

FIG. 13 is a partial cross sectional view, in part similar to FIGS. 3-8, 11 and 12, and shows a tenth embodiment of the invention.

FIG. 14 is a partial cross sectional view, in part similar to FIGS. 3-8 and 11-13, and shows an eleventh embodiment of the invention.

FIG. 15 is partial cross sectional view, in part similar to FIGS. 3-8 and 11-14, and shows a twelfth embodiment of the invention.

FIG. 16 is a partial cross sectional view, in part similar to FIGS. 3-8 and 11-15, and shows a thirteenth embodiment of the invention.

FIG. 17 is a partial cross sectional view, in part similar to FIGS. 3-8 and 11-16, and shows an fourteenth embodiment of the invention.

FIG. 18 is a partial cross sectional view, in part similar to FIGS. 3-8 and 11-1 7, and shows an fifteenth embodiment of the invention.

FIG. 19 is a partial cross sectional view, in part similar to FIGS. 3-8 and 11-18, and shows a sixteenth embodiment of the invention.

FIG. 20 is an end elevational view of the rotor shaft of this embodiment.

### Detailed Description

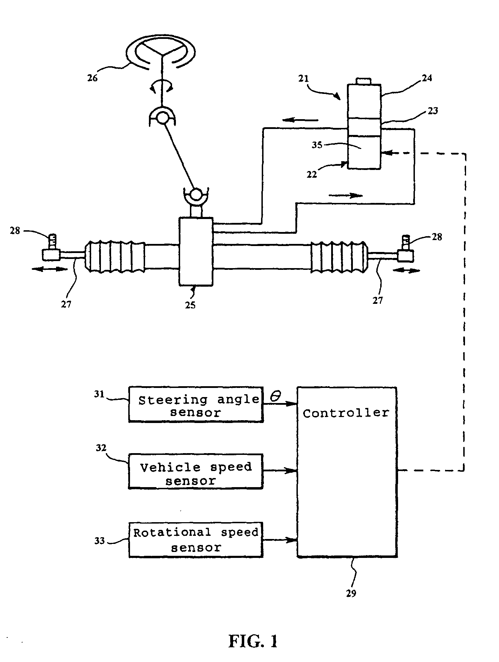

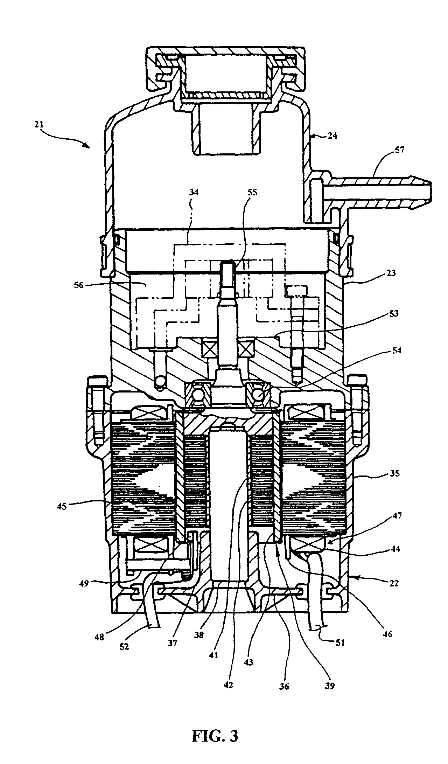

Referring now in detail to the drawings and initially to FIG. 1, this figure shows a typical type of environment in which the invention can be utilized. With this type of environment, there is a rotating electrical machine in the form of a brushless DC motor, which drives another load in the form of a hydraulic pump for utilization in an automotive power steering system. The combined assembly is indicated generally by the reference numeral 21 that includes the brushless DC motor 22 having a main motor housing to be described in more detail by reference later to Fig. 3 and an end closure 23 therefore which forms a bearing for the rotor of the electric motor, as will become apparent. In addition, a hydraulic pump, to be described in more detail by reference to Fig. 3, is contained in substantial part in the end closure 23. A further closure member 24 encloses the hydraulic pump, which in turn, supplies hydraulic fluid from a reservoir formed therein for power assist to a hydraulic power steering mechanism, indicated generally by the reference numeral 25. The power steering mechanism 25 provides assist power to the gear mechanism that couples a vehicle steering wheel 26 to a steering rack 27. The steering rack 27 is mechanically coupled by means of tie rods 28 to the steering links of the vehicle.

The torque of the electric driving motor 22 formed in part by the main motor housing is controlled by means of a controller, indicated generally by the reference numeral 29. The controller 29 that receives certain vehicle inputs so as to determine the amount of assist power that will be generated by the hydraulic pump in the end closure 23. Although any type of controls may be employed, the system can include a sensor 31 which senses the rotational angle of the steering wheel 26, a vehicle speed sensor, indicated generally by the reference numeral 32 and which inputs a signal indicative of the vehicle speed and an engine speed sensor 33 that inputs a signal indicative of the speed of rotation of the driving engine.

By sensing these values, it is possible to determine the amount of power assist that would be optimal for the steering under various conditions. For example, if the vehicle is traveling at a load speed and the steering angle sensors senses large steering inputs, it can be assumed that the vehicle is being parked and greater assist may be necessary. This also can be determined by low vehicle engine speed, which indicates that the vehicle is in the parking mode. Of course, the specific control strategy that is employed forms no part of the invention and, as should be apparent from the foregoing description, the invention can be utilized in other applications and also in applications where rather than employing an electric motor the system employs an electrical generator, which may preferably be of the brushless DC type and which is driven by another form of prime mover and specifically a rotating shaft thereof.

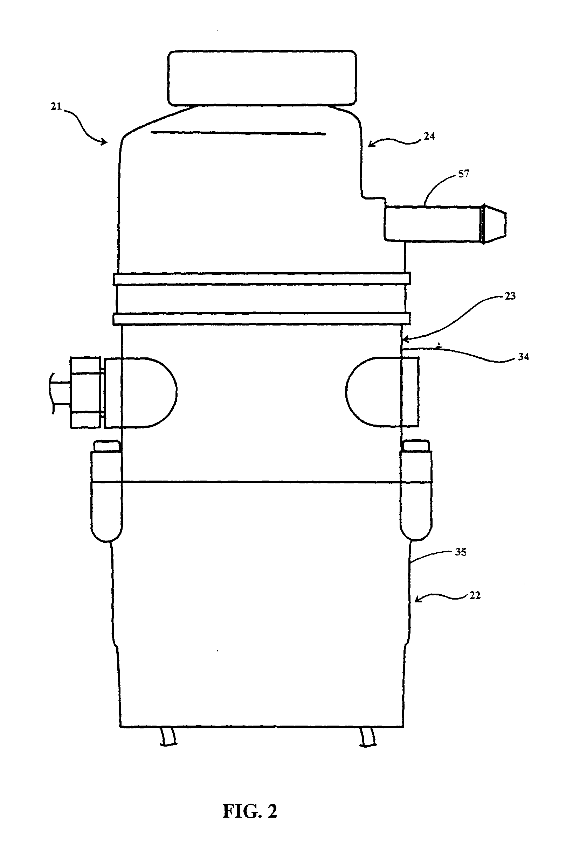

Referring now to FIG. 2, this illustrates in more detail the assembly 21 and which includes three major components all contained within a basic common housing assembly. These include the housing of the main motor housing assembly 22 on to which is assembled an end closure 23 which, in turn, contains a reversible hydraulic pump 34. This pump 34 draws fluid from a reservoir contained within the further closure member 24.

The internal construction of the arrangement shown in FIG. 2 may be best understood by reference to FIG. 3 which is a cross sectional view of this assembly. Referring first to the construction of the DC brushless reversible electric motor 22, it includes a housing assembly that is comprised of a main housing piece 35 which had a generally cylindrical configuration and which is preferably formed from a high strength, lightweight material such as aluminum alloy or the like.

The lower end of the main housing 35 is closed by an integral end closure 36 formed therewith. This end closure 36 has a boss portion 37 that receives a hardened steel, rotor support shaft 38, which extends into the cylindrical portion of the housing 35. This passes through a bore formed in a rotor assembly, indicated generally by the reference numeral 39. More specifically, this bore is comprised of an oil impregnated bearing 41 that is pressed or otherwise fitted into a bore 42 formed in the rotor assembly 39. The rotor assembly 39 is preferably formed from laminated electromagnetic steel plates on to which permanent magnets 43 are bonded at spaced intervals around the circumference.

The magnets 43 are preferably formed from a magnetic material such as alnico, ferrite, neodymium-iron-boron or like materials. The magnets 43 are magnetized so that the polarity changes alternately in the circumferential direction and may be formed by either cylindrical shaped magnets or rectangular plate-like magnets bonded in side by side relation to the center axis. The outside surface of the rotor assembly 39 is preferably protected by a coating for rust proofing and to contain the plates by a suitable molded resin such as PPS (polyphenylene sulfide manufactured by DOW Chemicals). This is preferably for protection of the magnets 43.

Because the rotor shaft support 38 and bearing 41 extend a substantial axial distance into the rotor assembly 39, the rotor assembly 39 will be stable even when the remaining components, to be described later, of the motor assembly 22 are not in position.

Positioned within the housing portion 35 radially outwardly of the outer surface of the permanent magnets 43 of the rotor assembly 39 is an armature assembly comprised of a three-phase field magnet coil, indicated at 44. This is comprised of a laminated core 45. The coil windings 44 are wound around insulating bobbins 46 surrounding the core poles to form the armature assembly, indicated generally by the reference numeral 47.

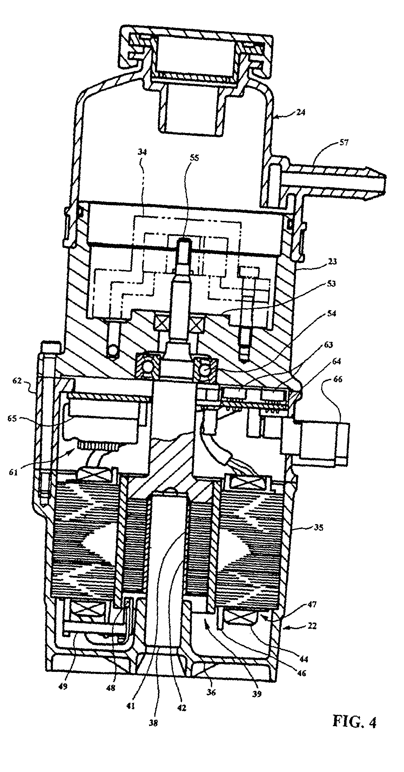

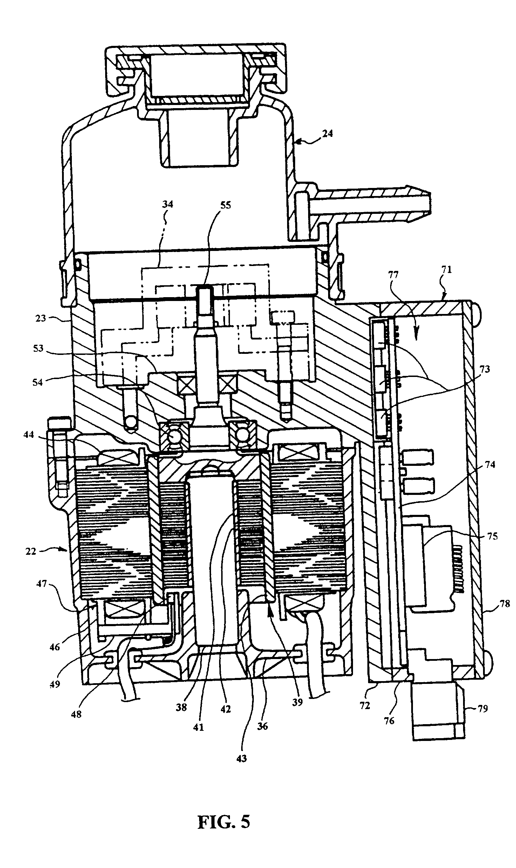

In order to control the polarity of the electromagnets of the armature assembly 47 to effect rotation of the rotor assembly 39, there are provided a plurality of sensors specifically Hall-type sensors, indicated by the reference numeral 48 which are mounted on a sensor plate 49 and which extend axially inwardly of the radial inner periphery of the magnets 43. These magnets 43 therefore extend axially beyond the core plates 45 so as to provide a very compact assembly. This provides an indication of the angular position of the rotor and thus permits the appropriate control through a control arrangement, one type of which will be described shortly. Electrical conductors 51 and 52 pass through the integral end closure 36 for receipt of the electric power. In this embodiment, the controller assembly is suitably mounted externally of the motor assembly 22. Other control mounting arrangements are shown in Figs. 4 and 5.

The end closure 23 has an integral wall portion 53 that receives an anti-friction bearing 54 that is received on a shoulder formed on the rotor assembly 39 at one end of a driving shaft portion 55 thereof. This shaft portion 55 extends into a cavity 56 formed in the end closure 23 for the motor assembly 22. The hydraulic pump 34 is received in this cavity 56 and thus, is contained and closed by the further closure member 24. The hydraulic fittings, one of which is shown in this figure and identified by the reference numeral 57, are provided for transmitting the fluid under pressure to the hydraulic steering control mechanism 25 shown in FIG. 1.

On assembly, the rotor 39 can be mounted in the housing piece 35 and when the armature plates 45 and complete armature assembly 47 are in position. Then, the end closure 23 can be placed into position with the hydraulic pump 34 mounted therein into driving relationship with the shaft portion 55. Thus, it should be readily apparent that the number of bearings required can be reduced and the assembly made much more compact. Also, this arrangement permits the use of conventional type pumps, which do not have to be specially designed so as to cooperate with the specific form of electric motor employed.

FIG. 4 shows another embodiment of the invention, which is generally similar to the embodiment thus far described and particularly to the construction as shown in FIG. 3. Therefore, where components of this embodiment are the same as that previously described, they will be identified by the same reference numerals and will be described again only insofar as is necessary to understand the construction and operation of this embodiment.

In this embodiment, a controller assembly, indicated generally by the reference numeral 61, is provided within the combined housing assembly 21. This controller assembly 61 is comprised of a further housing piece 62, which is sandwiched between the cylindrical portion of the motor housing 35 and the end closure 23 therefore.

Contained within this housing 62 is the control mechanism for the motor assembly 22 and this includes a bridge circuit that is comprised of, for example, six FETS 63 that are mounted on a support plate 64 in close thermal contact with the metal housing pieces 23 and 35 so as to rapidly dissipate heat therefrom. In addition, other control circuit components such as an IC element 65 are mounted on the plate 64 and are connected to a external connector 66 so that the electrically connections can be made externally without the need to pass any conductors therethrough as with the preceding described embodiment. In all other regards this embodiment is the same as that previously described and it has the same advantages and features as previously set forth.

FIG. 5 shows another embodiment of the invention, which is quite similar to those already, described but in this embodiment, a control assembly, indicated generally by the reference numeral 71, is mounted on the side of the end closure 23 of the assembly so as to shorten the overall length. This control assembly 71 cooperates with a mounting boss 72 formed on the closure member 23 and also supports six FETS 73 on an insulating plate or circuit board 74 on which other electrical components are mounted such as an IC element 75.

The controller 71 is comprised of an elongated housing member 76 that defines the cavity 77 in which these components are located and which cavity is closed by a closure plate 78 for servicing purposes. An end mounted electrical connector 79 provides for the electrical connections for the control.

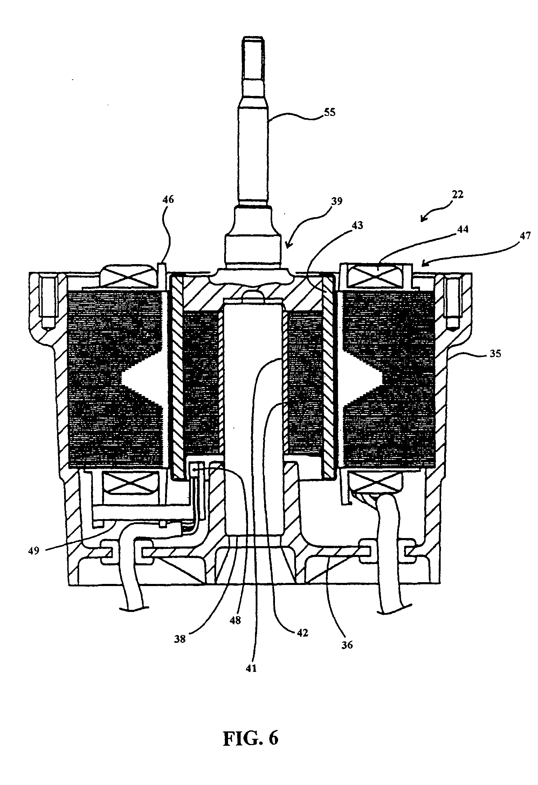

Next will be described will be a series of embodiments (Figs. 6-8, 9 and 10, 11-18 and 19 and 20 showing different arrangements in which the rotating electrical machine and specifically the brushless DC motor 22 can be constructed. Because these various embodiments can be utilized with any of housing assemblies of the type described and illustrated in FIGS. 3-5 having either internal or external controls, only the motor portion of the structure is illustrated in each embodiment.

The first embodiment shown in FIG. 6 basically is the same as the electric motor portion of those embodiments already described. Therefore, it is believed that further description of this embodiment is not necessary to permit those skilled in the art to practice the invention and common parts are identified by the same reference numerals.

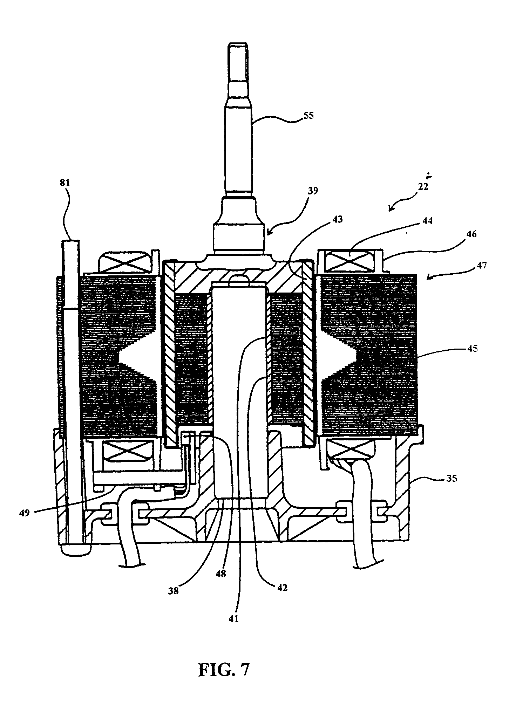

FIG. 7 illustrates another embodiment that further reduces the costs and simplifies the overall construction in that the armature assembly 47 of the motor assembly 22 is not totally covered by the end closure and housing portion 35. In fact, the axial length of this portion 35 is reduced and threaded fasteners 81 pass through the laminated plates of the armature core 45 and can be fasten to the end closure 23. The end closure 23 need not be extended downwardly so as to enclose the outer periphery of the armature plates 45 that are not covered by the portion 35. This reduces the cost and weight of the overall construction.

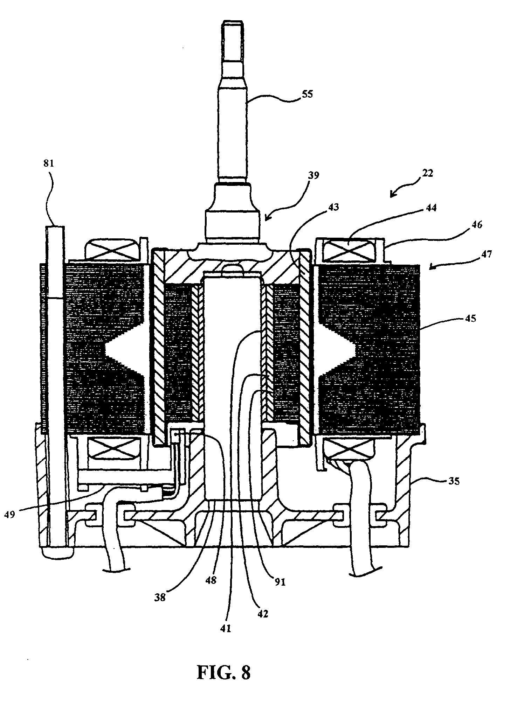

FIG. 8 illustrates another embodiment of motor assembly, which is basically the same as that shown in FIG. 7. However, in this embodiment, the laminations of the rotor have in their center a steel plate sleeve 91 into which the oil impregnated bearing 41 is pressed fit. Because of the fact that the steel sleeve 91 has a smooth surface as opposed to the rougher surface provided by the laminations of the core 45, the oil impregnated bearing 41 can be more easily inserted without the likelihood of damage occurring to it.

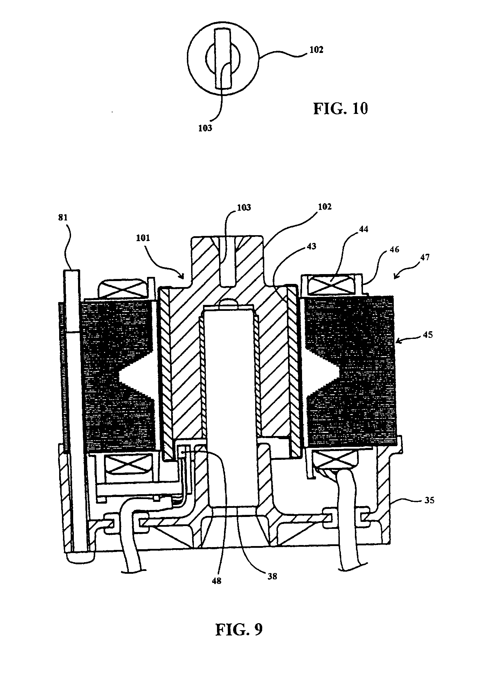

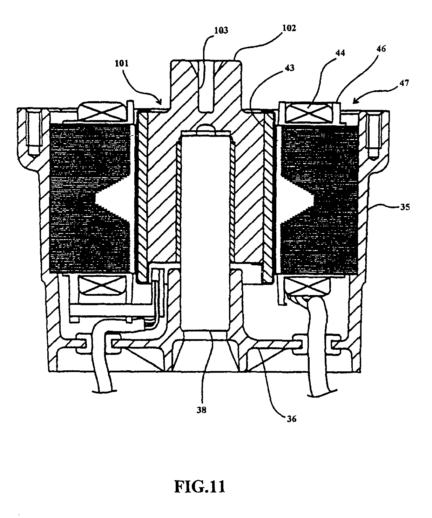

FIGS. 9 and 10 show another embodiment of this invention and this embodiment is similar to those of FIGS. 7 and 8. Therefore parts which are the same are identified by the same reference numerals. In this embodiment rotor, indicated generally by the reference numeral 101, has a solid rather than a laminated cylindrical body 102. The permanent magnets 43 are bonded to the outer circumference of this body 102.

The extended portion of the rotor body 102 is formed with a rectangular shaped opening 103 so that the driven load will have a tongue shape that fits into this opening so as to establish a driving relationship, thus eliminating the need for keys or splines.

In the embodiment of FIG. 11 the structure is basically the same as that shown in FIG. 9, however, in this embodiment the main housing 35 is longer and extends up to the top of the structure much like the embodiments of FIGS. 3-5 and 6.

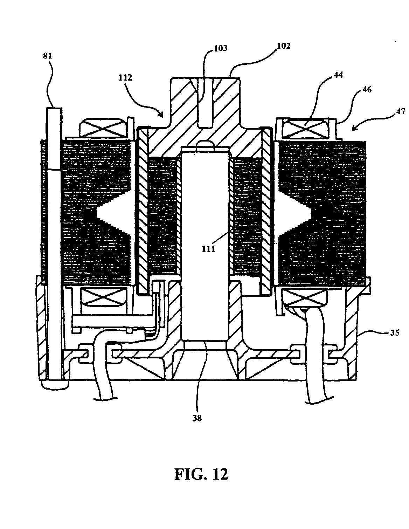

The embodiment of FIG. 12 is like the embodiment of FIGS. 9 and 10, however, this embodiment employs a laminated core 111 for main portion of the rotor, indicated generally by the reference numeral 112. Where other components are the same as those previously described, they have been identified by the same reference numerals.

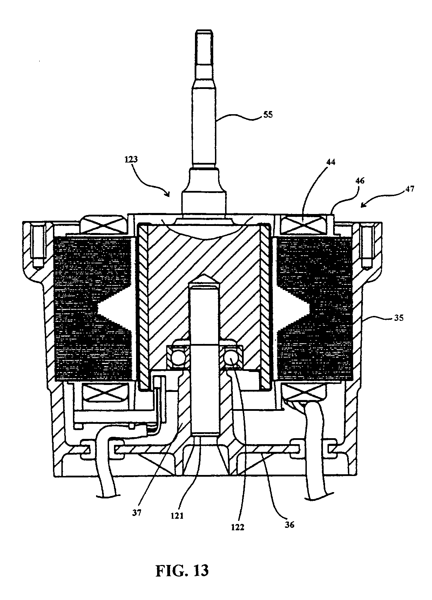

In all of the embodiments thus far described, the rotor has been formed with a bored opening that receives the support pin and utilizes an oil impregnated bearing. FIG. 13 shows another embodiment having a housing construction like those of FIGS. 3-5,6 and 11 but instead of the larger diameter, longer steel post, there is provided a pin like support post 121 that is received in the end plate opening formed by the boss portion 37 and which carries a ball bearing 122 on its outer periphery. This ball bearing is pressed fitted into the rotor body, which, in this embodiment, is solid, and the rotor is indicated by the reference numeral 123. This provides a longer life.

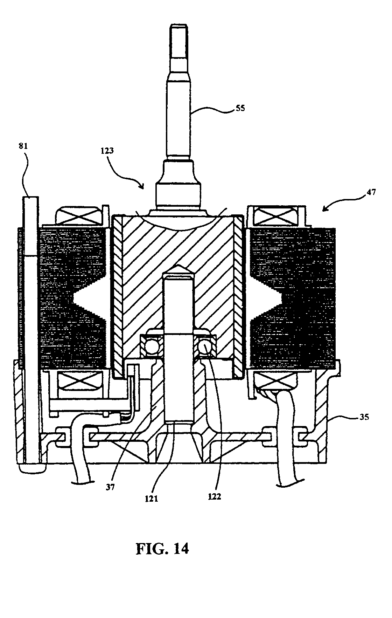

FIG. 14 shows another embodiment that is like that of the embodiment of FIG. 13, however, in this embodiment the stator case is shorter and only engages one end of the stator like the embodiments of FIGS. 7, 8, 9 and 10, and 12.

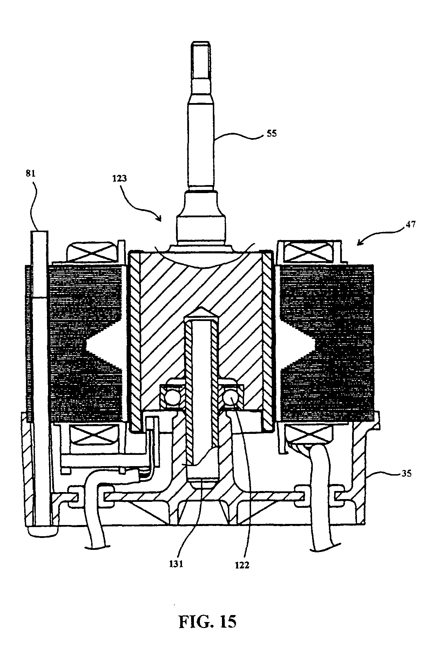

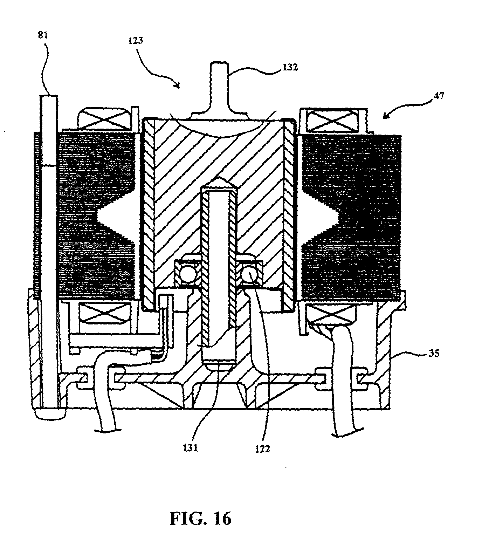

FIGS. 15 and 16 illustrate different embodiments of the invention wherein rather than using a solid pin as in the embodiments of FIGS. 13 and 14, the anti-friction ball bearing 122 is carried on a tubular steel rod 131. In the embodiment of FIG. 16, the end of the rotor shaft, indicated by the reference numeral 132, is provided with a rectangular projection that can fit into a similarly shaped female key opening formed in the associated pump.

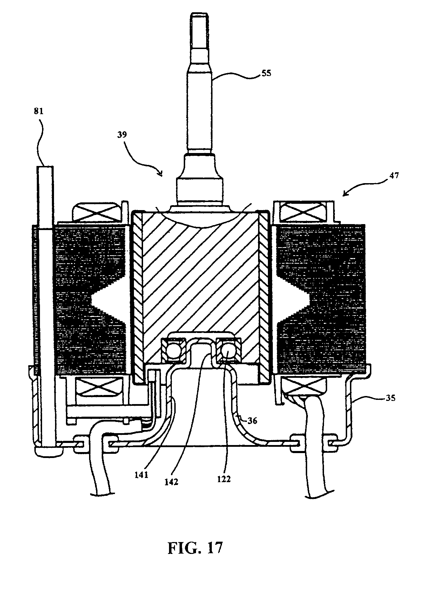

FIGS. 17-19 shows another type of bearing arrangement for the rotor. In these embodiments, the integral end closure 36 of the motor housing 35 is formed with an upstanding cylindrical projection 141 having a smaller diameter part 142 on which the ball bearing 122 is mounted.

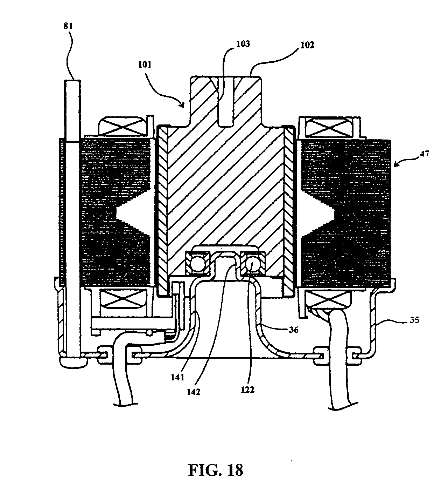

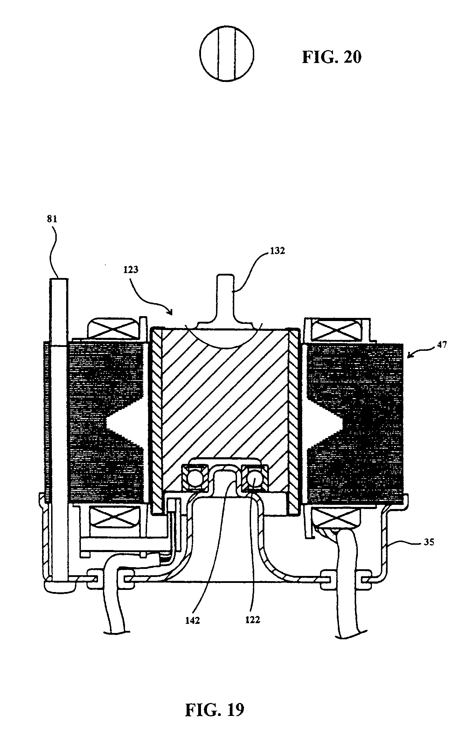

FIG. 17 shows a conventional type shaft arrangement for the rotor like shown in FIGS. 2-4, 5-8, and 17, while FIG. 18 shows a slotted arrangement as in FIGS. 9 and 10, 11 and 12. FIG. 19 shows a tongue like shaft end as in FIG. 16 for coupling to the associated hydraulic pump.

Thus, from the foregoing description it should be readily apparent that the described embodiments of the invention provide very compact assemblies for rotating electrical machines that are associated with other machines having a rotating shaft either as an input to the rotating electrical machine or as being driven by the rotating electrical machine. Of course, the foregoing description is that of preferred embodiments of the invention and various changes and modifications may be made without departing from the spirit and scope of the invention, as defined by the appended claims.

## Claims

1. A DC rotating electrical machine comprised of an outer housing forming a stator of said DC rotating electrical machine, said outer housing being comprised of a generally cylindrical center section and affixed first and second end closures, a rotor journalled within said outer housing and extending through said first end closures for driving connection to a related rotating machine, said first end closure forming a cavity in which a substantial portion of said related rotating machine is contained.

2. A DC rotating electrical machine as set forth in claim 1 wherein a third end closure is affixed in closing relation to the cavity of the first end closure for containing the related rotating machine within the cavity of said first end closure.

3. A DC rotating electrical machine as set forth in claim 1 wherein the first and second end closures are axially spaced from each other and the second end closure is integrally formed with an axially extending cylindrical center section.

4. A DC rotating electrical machine as set forth in claim 3 wherein the first end closure is in abutting relation to the axially extending cylindrical center section.

5. A DC rotating electrical machine as set forth in claim 3 wherein the first end closure is axially spaced from the axially extending cylindrical center section.

6. A DC rotating electrical machine as set forth in claim 5 wherein the machine includes a stator made up a plurality of field coils.

7. A DC rotating electrical machine as set forth in claim 6 wherein the plurality of field coils are wound around a laminated core.

8. A DC rotating electrical machine as set forth in claim 7 wherein a portion of the laminated core is exposed between the first and second end closures.

9. A DC rotating electrical machine as set forth in claim 1 wherein the DC rotating electrical machine is brushless.

10. A DC rotating electrical machine as set forth in claim 9 further including a sensor contained within the outer housing for sensing the rotational position of said rotor.

11. A DC rotating electrical machine as set forth in claim 10 wherein the machine includes a stator made up a plurality of field coils.

12. A DC rotating electrical machine as set forth in claim 11 wherein a controller responsive to the output of the sensor switches the polarity of the field coils.

13. A DC rotating electrical machine as set forth in claim 12 wherein tire controller is mounted in the interior of the machine.

14. A DC rotating electrical machine as set forth in claim 13 wherein the controller is mounted axially between the first and second end closures.

15. A DC rotating electrical machine as set forth in claim 14 wherein the controller is mounted in a cylindrical member interposed between the first and second end closures.

16. A DC rotating electrical machine as set forth in claim 12 wherein the controller is mounted on the exterior of the machine.

17. A DC rotating electrical machine as set forth in claim 1 wherein the second end closure carries a cylindrical post extending into an cylindrical opening in the rotor for journaling said rotor within the outer housing.

18. A DC rotating electrical machine as set forth in claim 17 wherein the cylindrical post extends a substantial distance axially into the rotor.

19. A DC rotating electrical machine as set forth in claim 18 wherein the cylindrical post engages a bearing associated with the rotor.

20. A DC rotating electrical machine as set forth in claim 19 wherein the bearing associated with the rotor comprises an oil impregnated, sleeve type bearing.

21. A DC rotating electrical machine as set forth in claim 17 wherein the bearing associated with the rotor comprises an anti friction bearing.

22. A DC rotating electrical machine as set forth in claim 17 wherein the cylindrical post is detachably connected to the second end closure.

23. A DC rotating electrical machine as set forth in claim 22 wherein the bearing associated with the rotor comprises an oil impregnated, sleeve type bearing.

24. A DC rotating electrical machine as set forth in claim 22 wherein the bearing associated with the rotor comprises an anti friction bearing.

25. A DC rotating electrical machine as set forth in claim 21 wherein the cylindrical post is integrally formed with the second end closure.

26. A DC rotating electrical machine as set forth in claim 1 in combination with a hydraulic powered steering booster and the DC rotating electrical machine comprises a motor and the associated machine is a hydraulic pump.

27. A DC rotating electrical machine comprised of an outer housing forming a stator of said DC rotating electrical machine, said outer housing being comprised of a generally cylindrical center section closed at opposite ends by first and second end closures, a rotor within said outer housing and extending through said first end closures for driving connection to a related rotating machine, said second end closure carrying a cylindrical post extending into an cylindrical opening in said rotor for journalling said rotor within said outer housing.

28. A DC rotating electrical machine as set forth in claim 27 wherein the cylindrical post extends a substantial distance axially into the rotor.

29. A DC rotating electrical machine as set forth in claim 28 wherein the cylindrical post engages a bearing associated with the rotor.

30. A DC rotating electrical machine as set forth in claim 29 wherein the bearing associated with the rotor comprises an oil impregnated, sleeve type bearing.

31. A DC rotating electrical machine as set forth in claim 29 wherein the bearing associated with the rotor comprises an anti friction bearing.

32. A DC rotating electrical machine as set forth in claim 27 wherein the cylindrical post is detachably connected to the second end closure.

33. A DC rotating electrical machine as set forth in claim 32 wherein the bearing associated with the rotor comprises an oil impregnated, sleeve type bearing.

34. A DC rotating electrical machine as set forth in claim 32 wherein the bearing associated with the rotor comprises an anti friction bearing.

35. A DC rotating electrical machine as set forth in claim 27 wherein the cylindrical post is integrally formed with the second end closure.
